# EUROPEAN PATENT APPLICATION

(11) **EP 2 276 215 A1**
(43) Date of publication of application: **19.01.2011**
(21) Application number: 09745429.2
(22) Date of filing: 15.05.2009
(51) Int. Cl.: H04L 29/06

(54) **BOOKMARK SERVICE PROCESSING METHOD AND SYSTEM, AND APPARATUS FOR PROVIDING BOOKMARK SERVICE**

(30) Priority: 15.05.2008 CN 200810111646
(71) Applicant: Huawei Technologies Co., Ltd., Longgang District, Shenzhen Guangdong 518129 (CN)
(72) Inventor: ZHANG, Dewen, 518129 Shenzhen (CN); SHI, Youzhu, 518129 Shenzhen (CN); QI, Baojian, 518129 Shenzhen (CN)
(74) Representative: Kreuz, Georg Maria
(86) International application number: PCT/CN2009/071814
(87) International publication number: WO 2009/138045

(57) **Abstract**

A method and system for processing a bookmark service and an apparatus for providing a bookmark service are provided. The method for processing a bookmark service includes: receiving a bookmark association trigger message; acquiring a bookmark list associated with a program content according to the bookmark association trigger message; sending the bookmark list to display a bookmark operation interface associated with the program content and perform operations on bookmarks. When the program content is played normally by a user, the method and system for processing a bookmark service and the apparatus for providing a bookmark service indicates the bookmark associated with the program content to the user, so as to help the user to perform operations such as bookmark jumping.

## Description

### FIELD OF THE TECHNOLOGY

The present invention relates to the field of communications technology, and more particularly to a method and system for processing a bookmark service and an apparatus for providing a bookmark service.

### BACKGROUND OF THE INVENTION

An Internet Protocol (IP) Multimedia Subsystem (IMS) is defined according to the 3rd Generation Partnership Project (3GPP) standard, and is a target network of the 3rd Generation (3G) mobile network to achieve packet voice and packet data and provide uniform multimedia services and applications.

The IMS adopts an IP packet domain as a bearer channel for control signaling and media transmission, and adopts the session initiation protocol (SIP) as call control signaling, so as to separate service management, session control, and bearer access from each other. The SIP is an application layer control protocol for establishing, changing, and terminating a multimedia session or call. The multimedia session includes multimedia conference, tele-education, and Internet phone. The core of the SIP is defined by the International Engineering Task Force (IETF) standard organization. Other international standardization organizations such as the International Telecommunication Union-Telecommunication Standardization Sector (ITU-T) and the European Telecommunications Standards Institute (ETSI) also adopt the IMS as the defined core network of the next generation network.

An Internet Protocol Television (IPTV) service is a novel technology for providing a variety of interactive services including the digital TV for family users, by using multiple technologies such as by using broadband IP network, integrated Internet, multimedia, and communication. The user can enjoy the IPTV service in the manner of using a personal computer (PC) or a network set-top box in combination with an ordinary TV at home, or enjoy the IPTV service through a mobile terminal. The IPTV adopts the Transport Control Protocol (TCP)/Internet Protocol (IP) as the bearer protocol to perform unicast, broadcast or multicast on video service, so as to effectively combine the television network, the telephone network, and the Internet together. Therefore, the IPTV service is the most representative service in the three-network convergence. The IPTV service provided under the overall architecture of the IMS (IMS based IPTV) can fully use the existing mechanisms such as registration, authentication, routing, session control and establishment, service triggering, charging, and end-to-end quality of service (QoS) assurance in the IMS network to provide the user with a streaming media service and a multimedia service that converges a streaming media and a real-time session service.

In addition, the IPTV is capable of providing a bookmark service, that is, in the process that a user watches an IPTV program, a bookmark is set to indicate a location point in the program content, so that the user can open a bookmark management interface to view a list of all set bookmarks and request to play the content corresponding to a certain bookmark. In addition to an indicator of the location point of the program content, other settings may be set for the bookmark, such as a name of the bookmark that is set by a user for ease of comprehension, and detailed description of the bookmark that describes the purpose or the use of setting the bookmark, or an introduction of media content corresponding to the bookmark can also be set. The current IPTV bookmark service is capable of providing a bookmark management interface for the user to view bookmarks, perform management operations such as deleting and adding bookmark items, or request to play the content corresponding to a bookmark item. However, the bookmark management interface is only a dedicated operation interface for bookmark management, wherein the bookmark list includes bookmarks of various contents, so as to enable an independent operation on a bookmark.

During the implementation of the bookmark service, the inventors find that when a user plays a certain program content in a normal mode, if a bookmark associated with the program content exists, the current bookmark service cannot indicate to the user that the associated bookmark exists to help the user to perform operations such as bookmark jumping. Furthermore, when the program content is played to a location point set with a bookmark, the bookmark information cannot be automatically displayed to indicate to the user that the location point is set with a bookmark and a content of the bookmark, for example, the description of the bookmark, which may be some reference information set by the user. Therefore, the experience of the user is reduced.

### SUMMARY OF THE INVENTION

The embodiments of the present invention are directed to a method and system for processing a bookmark service and an apparatus for providing a bookmark service, so as to indicate the bookmarks associated with the program content to the user when the program content is played by the user normally, thus facilitating the user to perform operations such as bookmark jumping.

In an embodiment, the present invention provides a method for processing a bookmark service. The method includes the following steps:
A bookmark association trigger message is received.

According to the bookmark association trigger message, a bookmark list associated with a program content is acquired.

The bookmark list is sent. The bookmark list is used to display a bookmark operation interface associated with the program content and perform operations on bookmarks.

In an embodiment, the present invention provides a system for processing a bookmark service. The system includes a triggering unit, a providing unit, and a processing unit.

The triggering unit is configured to send a bookmark association trigger message.

The providing unit is configured to acquire a bookmark list associated with a program content according to the bookmark association trigger message, and send the bookmark list.

The processing unit is configured to display a bookmark operation interface associated with the program content according to the bookmark list, and perform operations on bookmarks.

In an embodiment, the present invention provides an apparatus for providing a bookmark service. The apparatus includes a receiving unit and a providing unit.

The receiving unit is configured to receive a bookmark association trigger message.

The providing unit is configured to acquire a bookmark list associated with a program content according to the bookmark association trigger message received by the receiving unit, and send the bookmark list.

The method and system for processing a bookmark service and the apparatus for providing a bookmark service can indicate the bookmark associated with the program content to the user when the program content is played by the user, so as to help the user to perform operations such as bookmark jumping.

The technical solutions of the present invention are further described in detail with reference to the accompanying drawings and the following embodiments.

### BRIEF DESCRIPTION OF THE DRAWINGS

FIG. 1 is a flow chart of a method for processing a bookmark service according to an embodiment of the present invention;
FIG. 2 is a schematic structural view of a system for processing a bookmark service according to an embodiment of the present invention;
FIG. 3 is a signaling flow chart of a method for processing a bookmark service according to Embodiment 1 of the present invention;
FIG. 4 is a signaling flow chart of a method for processing a bookmark service according to Embodiment 2 of the present invention;
FIG. 5 is a signaling flow chart of a method for processing a bookmark service according to Embodiment 3 of the present invention;
FIG. 6 is a signaling flow chart of a method for processing a bookmark service according to Embodiment 4 of the present invention;
FIG. 7 is a signaling flow chart of a method for processing a bookmark service according to Embodiment 5 of the present invention;
FIG. 8 is a signaling flow chart of a method for processing a bookmark service according to Embodiment 6 of the present invention;
FIG. 9 is a schematic structural view of an apparatus for triggering a bookmark service according to an embodiment of the present invention;
FIG. 10 is a schematic structural view of an apparatus for providing a bookmark service according to Embodiment 1 of the present invention;
FIG. 11 is a schematic structural view of an apparatus for processing a bookmark service according to an embodiment of the present invention;
FIG. 12 is a schematic structural view of an apparatus for controlling a bookmark service according to an embodiment of the present invention; and
FIG. 13 is a schematic structural view of an apparatus for providing a bookmark service according to Embodiment 2 of the present invention.

### DETAILED DESCRIPTION OF THE EMBODIMENTS

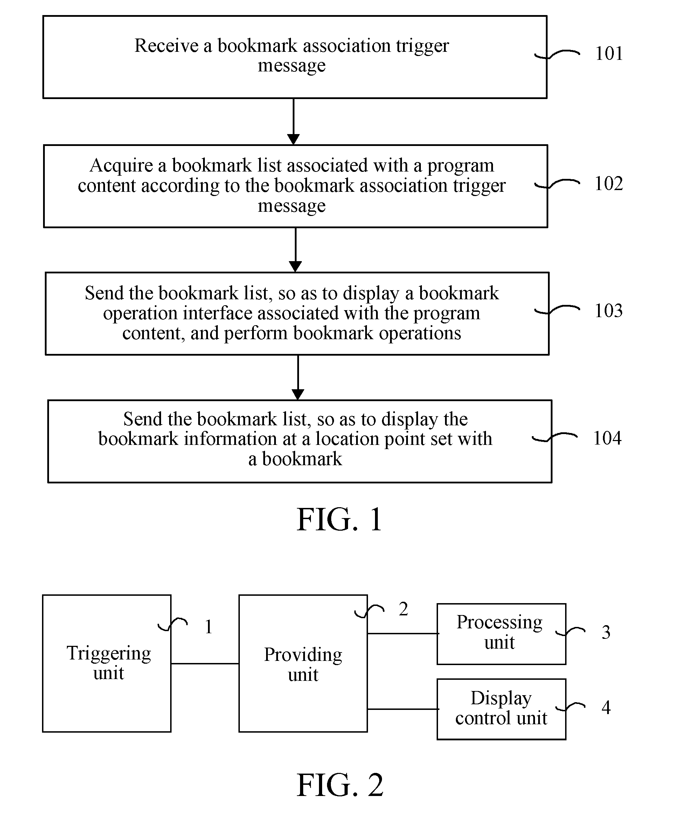

FIG. 1 is a flow chart of a method for processing a bookmark service according to an embodiment of the present invention. As shown in FIG. 1, the method includes the following steps:
In step 101, receive a bookmark association trigger message.

Before a providing unit receives the bookmark association trigger message, a triggering unit triggers bookmark association under certain conditions, and sends the bookmark association trigger message to a providing unit.

The bookmark association may be triggered in the process that a user requests playing an IPTV program, after a user requests playing an IPTV program, or in the process that a user watches an IPTV program. The bookmark association may be triggered by an operation event of the user, and the operation event includes an operation request event of the user and an operation result event of the user. The operation event of the user may directly trigger the bookmark association or indirectly trigger the bookmark association. For example, the operation of the user results in changes of a service state of the user, and the triggering unit senses that the service state of the user is changed and triggers the bookmark association.

Specifically, as for a live television program, the request event of the user for establishing the live television program may trigger the bookmark association, for example, the triggering unit is located at a live television program (LTV) application server (AS). When the LTV AS receives the request of the user for establishing a live television program, the triggering unit triggers the bookmark association. A result event that the user has successfully established the live television program may trigger the bookmark association, for example, the LTV AS processes the request of the user for establishing the live television program, after successful processing such as authentication and after a success response is returned to the user terminal, the triggering unit triggers the bookmark association. The live television program request event or result event of the user may also indirectly trigger the bookmark association. For example, the triggering unit subscribes to the LTV service state of a user, and when the LTV service state of the user is changed because, for example, the user is watching the LTV service or the user changes the channel, a presence AS sends service state update notification message of the user to the triggering unit, and the triggering unit receives the notification message and triggers the bookmark association. In the latter two conditions, the bookmark association is triggered in the process that the user is watching the live television program.

Furthermore, the result event that the user has successfully switched the channel may also trigger the bookmark association. For example, the triggering unit is located at the LTV AS, and after the user switched the channel (the channel may be switched by the user without processing by the LTV AS), the user terminal reports a channel switching result event to the LTV AS, and the triggering unit triggers the bookmark association.

As for a program on demand, for example, a video on demand (VoD) program, similar to a live program, the user establishes an request event and a result event of the VoD program, and triggers the bookmark association. For example, the triggering unit is located at a VoD AS, and after receiving an request for establishing a VoD program of the user, the triggering unit triggers the bookmark association; after the VoD AS successfully processes the request for establishing a VoD program of the user and sends a success response result, the triggering unit triggers the bookmark association. The triggering unit may be not located at the VoD AS, but have subscribed to the VoD service state of the user. When receiving a notification message that the user enters a VoD program for watching, the triggering unit triggers the bookmark association.

Furthermore, the bookmark association trigger message includes a bookmark association trigger indication, and may further include user identity information and program content related information such as a program content identity or a channel identity. The bookmark association trigger message may also not directly include the program related information and the user identity, but instead carry indirect information such as session identity information (the providing unit may use the indirect information to acquire the program related information and the user identity). The bookmark association trigger message may be transmitted by using the Session Initiation Protocol (SIP), for example, being carried in a message such as an SIP message, an SIP information (Info), or an SIP response code, or be transmitted through a protocol such as the Hypertext Transfer Protocol (HTTP).

In step 102, according to the bookmark association trigger message, acquire a bookmark list associated with the program content.

After receiving the bookmark association trigger message, the providing unit acquires the program content related information and the user identity, and a bookmark list associated with the program content according to the user identity and the program content related information. The program content related information may be a program content identity or a channel identity. The providing unit may acquire the program related information directly from the bookmark association trigger message, or indirectly in other modes. For example, the bookmark association trigger message carries a session identity, and the providing unit queries the program content related information according to the session identity. Additionally, the user identity information is similar to the program related information, and can also be acquired in the two modes. Furthermore, the providing unit can also acquire the bookmark associated with the program content in two modes. In one mode a bookmark database is directly queried by using the user identity and the program content related information to acquire the associated bookmark list. In the other mode the providing unit acquires the bookmark data of the user by using the user identity information. For example, the providing unit queries the bookmark database to acquire the bookmark data of the user, matches the bookmark item in the bookmark with the program related information, finds out a bookmark item associated with the program, and acquires the associated bookmark list. Specifically, the matching method includes checking whether the content of each bookmark item in the bookmark data contains a program content identity or a channel identity one by one. If yes, the matching is to be successful, and the bookmark item is considered to be associated with the program.

In step 103, send the bookmark list to display a bookmark operation interface associated with the program content, and perform a bookmark operation.

After acquiring the associated bookmark list, the providing unit sends an associated bookmark indication message carrying the associated bookmark list to the processing unit.

In addition to the bookmark list associated with the program, the associated bookmark indication message further includes information such as the user identity and the program content related information (or the session identity), so that a receiver can map the associated bookmark list to the played program content and the user. The associated bookmark indication message sent by the processing unit further includes description of an operation interface and an operation logic of the bookmark associated with the program. In this case, the operation application of the associated bookmark is not generated by a bookmark operation unit, but is provided by the providing unit. The associated bookmark indication message is sent through the SIP, for example, being carried in a message such as an SIP message, an SIP Info message, an SIP response code message, or is sent through the HTTP.

After the processing unit receives the associated bookmark indication message, an associated bookmark operation interface is displayed on a display interface, which may be displayed on an existing program play interface or on a separate display device, for example, an intelligent remote control, and a bookmark operation of the user is received, so as to perform operations such as bookmark jumping. The displayed associated bookmark operation interface includes a list of bookmark items associated with the program and some operation buttons. Accordingly, the operation of the user includes clicking the bookmark item in the bookmark list or clicking an operation button. For example, the user clicks the bookmark item in the bookmark list, and the processing unit performs a corresponding processing logic and requests to play the media content corresponding to the bookmark item. Moreover, for example, the user clicks a "previous bookmark", and the processing unit determines a previous bookmark item near a play position of the current program content according to the play position and requests to play the media content corresponding to the bookmark item. The user may also select to close or hide the operation interface.

Furthermore, the associated bookmark operation interface displayed by the processing unit and the processing logic may be generated by the processing uint, or provided by the providing unit, that is, the associated bookmark indication message sent by the providing unit to the processing unit carries the description of the associated bookmark operation interface and the operation logic. For example, the bookmark operation interface is described with the HyperText Mark-up Language (HTML), the operation logic is described with the programming (JAVA) script, and the processing unit performs processing according to the description.

In step 104, send the bookmark list to display the bookmark information at a location point set with a bookmark.

The operation in step 104 is optional, and steps 103 and 104 are not subjected to a precedence order and can be performed in parallel.

After receiving the associated bookmark list, the providing unit sends the associated bookmark indication message carrying the associated bookmark list to a display control unit. After receiving the associated bookmark indication message, the display control unit acquires the bookmark list associated with the played program content. When a location point of the program content corresponding to the bookmark item in the bookmark list enters a play state, the display control unit controls to control a display of the corresponding bookmark information. The displayed bookmark information includes displaying that the location point is set with a bookmark and information of the bookmark such as a name of the bookmark and description information of the bookmark. The display of the bookmark information is to synchronously display the information of the corresponding bookmark on the display interface when the terminal plays the media content. The display control by the display control unit of processing the bookmark information includes two steps: the triggering of the display of the bookmark information and the performing of the display of the bookmark information. The triggering of the display of the bookmark information includes that the display control unit detects that the location point that is being played currently is set with a bookmark, that is, the location point corresponds to a bookmark on the associated bookmark list, or the display control unit detects that the location point on the program content corresponding to the bookmark item in the associated bookmark list enters the play state, and starts the performing of the display of the bookmark information. The location point on the program content is usually denoted by time, for example, a normal play time (npt), so the display control unit is required to be able to sense a time point corresponding to the program content that is being played currently, that is, the npt, and sense the changes of the npt when the program content is being played. Currently, when the program content is being played, the npt can be directly sensed on a media server (MF) that provides the media content and user terminal equipment that displays the media content. Therefore, the display control unit may be located in the two entities, and the display control unit may adopt the prior art to sense the changes of the npt, the detailed description of which is omitted here.

Furthermore, when the npt is changing, the display control unit detects whether the npt is identical with the bookmark item in the associated bookmark list. If the npt is identical with the bookmark item, for example, if the current npt is consistent with the npt value of the bookmark item, the associated bookmark item information is acquired, and the performing of the display of the bookmark information is triggered. The display of the bookmark information may be performed in two modes. One mode in which the media stream of the played program content includes the bookmark information to be displayed. For example, the bookmark information to be displayed is directly synthesized into a video picture of the media content, and the play terminal plays the program content normally to accomplish the display of the bookmark information without additional display processing. The other mode in which the bookmark information is not displayed in the media stream, that is, is not synthesized in the media picture, and the play terminal performs display processing, for example, transfers the bookmark information to be displayed, and performs additional display processing on the video picture, for example, overlapped display on the video picture or display in other auxiliary equipment, for example, a display interface of an intelligent remote control. The bookmark information to be displayed may be sent with the media stream, or through additional independent channels instead of with the media stream.

The method for processing a bookmark service can indicate the bookmark associated with the program content to the user when the program content is played normally by the user, thus facilitating the user to perform operations such as bookmark jumping. At the same time, when the program content is played to a location point set with a bookmark, corresponding bookmark information is displayed, thus facilitating the operations of the user, and improving the experience and satisfaction of the user.

FIG. 2 is a schematic structural view of a system for processing a bookmark service according to an embodiment of the present invention. As shown in FIG. 2, the system includes: a triggering unit 1, configured to send a bookmark association trigger message; a providing unit 2, configured to acquire a bookmark list associated with the program content according to the bookmark association trigger message, and send the bookmark list; a processing unit 3, configured to display a bookmark operation interface associated with the program content according to the bookmark list, and perform operations on bookmarks.

Furthermore, in order to enable the user to sense the bookmark related information at a location point set with a bookmark, the system for processing a bookmark service further includes a display control unit 4, configured to control a display of the bookmark information according to the bookmark list when the program content is played to the location point set with a bookmark. In an IMS based IPTV system, the triggering unit can be located at a VoD AS, an LTV AS, or other ASs, or in a user equipment (UE). The providing unit can be located at a VoD AS, an LTV AS, a bookmark AS, a recommended AS, or other ASs, or in the UE. Of course, the associated bookmark providing unit and the bookmark association triggering unit can be located in a same physical entity, for example, located in a same VoD AS or LTV AS. The processing unit can be located in the UE. Of course, the processing unit and the providing unit can also be located in a same physical entity, for example, in the UE. The display control unit can be located in an entity such as a UE and a media server (MF). Of course, the processing unit and the display control unit can also be located in a same physical entity, for example, in the UE.

Furthermore, the triggering unit further includes: a detection module, configured to determine whether a trigger event satisfies the bookmark association trigger conditions after detecting the trigger event; and a sending module, configured to send a bookmark association trigger message when the trigger event satisfies the bookmark association trigger conditions. The providing unit includes: an information acquisition unit, configured to acquire program content related information and a user identity according to the bookmark association trigger message, in which the program content related information includes a program content identity or a channel identity; and a bookmark list acquisition unit, configured to acquire a user information corresponding to the user identityand a bookmark list associated with the program content according to the user identity and the program content related information, in which the program content is identified by program content related information. The information acquisition unit also includes: a first acquisition module, configured to acquire the program content related information and/or the user identity from the bookmark association trigger message; or a second acquisition module, configured to query according to the session identity carried in the bookmark association trigger message, and acquire the program content related information and/or the user identity. The bookmark list acquisition unit can also include: a direct acquisition module, configured to query a bookmark database according to the user identity and the content related information, and acquire the bookmark list associated with the program content; and an indirect acquisition module, configured to query a bookmark database according to the user identity to acquire the bookmark data, match a bookmark item in the bookmark data with the program content related information, acquire a bookmark item associated with the program content, and acquire the bookmark list. The display control unit includes: a trigger module, configured to detect that a location point set with a bookmark enters a play state; and a display control module, configured to control a display of the bookmark information when it is detected that the location point set with a bookmark enters the play state. The bookmark information includes a name of the bookmark and description information of the bookmark.

The system for processing a bookmark service can indicate the bookmark associated with the program content to the user when the program content is played normally by the user, thus facilitating the user to perform operations such as bookmark jumping. At the same time, when the program content is played to a location point set with a bookmark, corresponding bookmark information is displayed, thus facilitating the operations of the user, and improving the experience and satisfaction of the user.

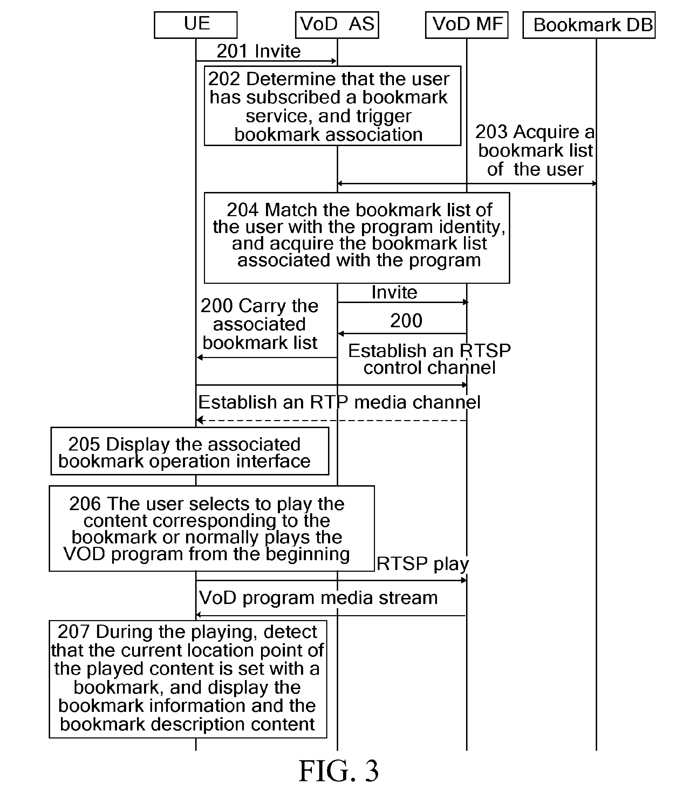

FIG. 3 is a signaling flow chart of a method for processing a bookmark service according to Embodiment 1 of the present invention. As shown in FIG. 3, the triggering unit and the providing unit are located at a VoD AS, and the processing unit and the display control unit are located in the UE. The method includes the following steps.

In step 201, the UE sends an request message to the VoD AS.

In step 202, the VoD AS determines that the user has subscribed to a bookmark service, and triggers bookmark association.

After receiving a VoD play request of the user, the VoD AS triggers the bookmark association service, which includes acquiring the user identity and an identity of a VoD program content requested by the user, determining that the user has subscribed to the bookmark service, and triggering the bookmark association when the VoD AS processes the VoD play request of the user. The user identity and the identity of the VoD program content requested by the user are acquired from the bookmark association trigger message.

In step 203, the VoD AS acquires a bookmark list of the user by querying a bookmark database (DB).

In step 204, the VoD AS matches the bookmark list of the user with the program identity, and acquires the bookmark list associated with the program.

The VoD play request response message SIP 200 message carries the associated bookmark list. Here, the associated bookmark indication message is located in the VoD play request response message.

In step 205, display the associated bookmark operation interface.

After receiving the VoD play request response message, the UE acquires the associated bookmark list, displays the associated bookmark operation interface, and receives and performs an operation on the bookmark of the user.

In step 206, the user selectively plays the content corresponding to the bookmark or normally plays the VOD program from the beginning.

In this embodiment, the operation interface of the associated bookmark is displayed before the program content starts to be played. The processing operation of the user is to perform normal playing from the beginning, or to select a certain bookmark item to start playing. During the playing, the user performs operations of selecting a "previous bookmark" or a "next bookmark", which can be brought out for operation after the bookmark association operation interface is hidden.

In step 207, during the playing, when it is detected that the current location point of the played content is set with a bookmark, display the bookmark information and the bookmark description content.

When the VoD content is being played, the UE detects that the location point set with a bookmark enters the play state, and the location point corresponds to the npt. The UE determines the npt value of the bookmark in the bookmark list mapped to the npt that is being played currently during the playing, and starts exhibition of the bookmark information, and displays the corresponding bookmark information on the display interface. The displayed information includes the name of the bookmark and the description information of the bookmark.

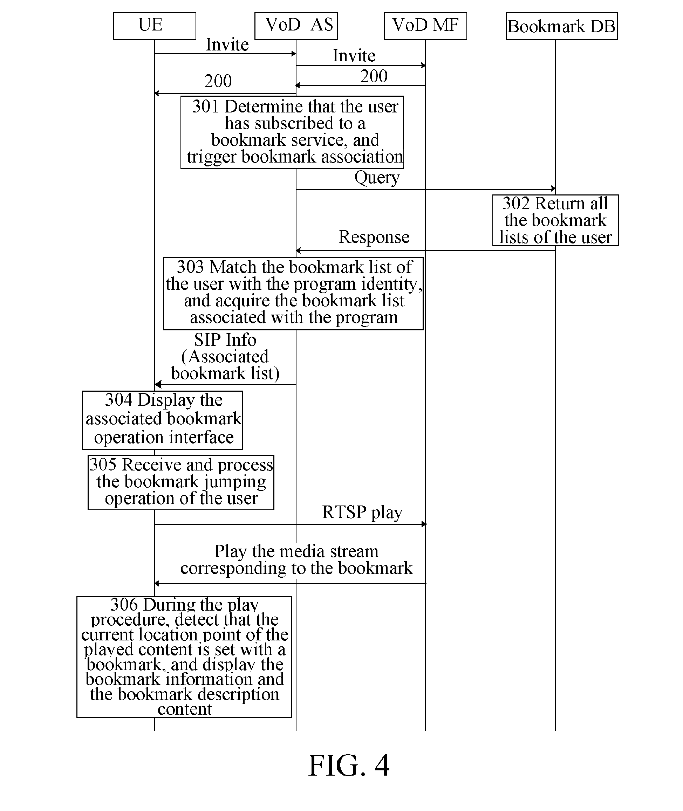

FIG. 4 is a signaling flow chart of a method for processing a bookmark service according to Embodiment 2 of the present invention. As shown in FIG. 4, the triggering unit and the providing unit are located in the VoD AS, and the processing unit and the display control unit are located in the UE. The method includes the following steps.

In step 301, the VoD AS determines that the user has subscribed to a bookmark service, and triggers bookmark association.

After processing the VoD play request of the user, the VoD AS triggers the bookmark association, which includes after successfully processing the VoD program play request of the user and returning a success response, determining that the user has subscribed to a bookmark service, acquiring a VoD program content identity and a user identity, and triggering the bookmark association. The identity of the VoD program content requested by the user is acquired from the bookmark association trigger message, and the user identity is acquired by querying the session identity carried in the bookmark association trigger message. The providing unit and the triggering unit can be located in a same physical entity VoD AS, and the bookmark association trigger message is a message inside an entity.

In step 302, return all the bookmark lists of the user.

The VoD AS acquires the bookmark list of the user by querying a bookmark database.

In step 303, the VoD AS matches the bookmark list of the user with the program identity, so as to acquire the bookmark list associated with the program.

By matching the bookmark list of the user with the VoD program content identity, the bookmark list associated with the program is acquired and is sent to the UE through an SIP Info message.

In step 304, display an associated bookmark operation interface.

In step 305, receive and process the bookmark jumping operation of the user.

After receiving the associated bookmark list, the UE displays the associated bookmark operation interface, and receives the input of the user. For example, the user selects to play a certain bookmark in the bookmark list, and the UE sends a play command request of the Real-time Transport Steaming Protocol (RTSP) to request to play the corresponding media content.

In step 306, during the playing, when it is detected that the current location point of the played content is set with a bookmark, display the bookmark information and the bookmark description content.

Similarly to Embodiment 1, when the location point set with a bookmark is played, the UE exhibits the corresponding bookmark information.

In this embodiment, the bookmark association is triggered by a result event of an operation corresponding to the play request of the user. In the user's experience, the associated bookmark operation interface is displayed after the program starts to be played.

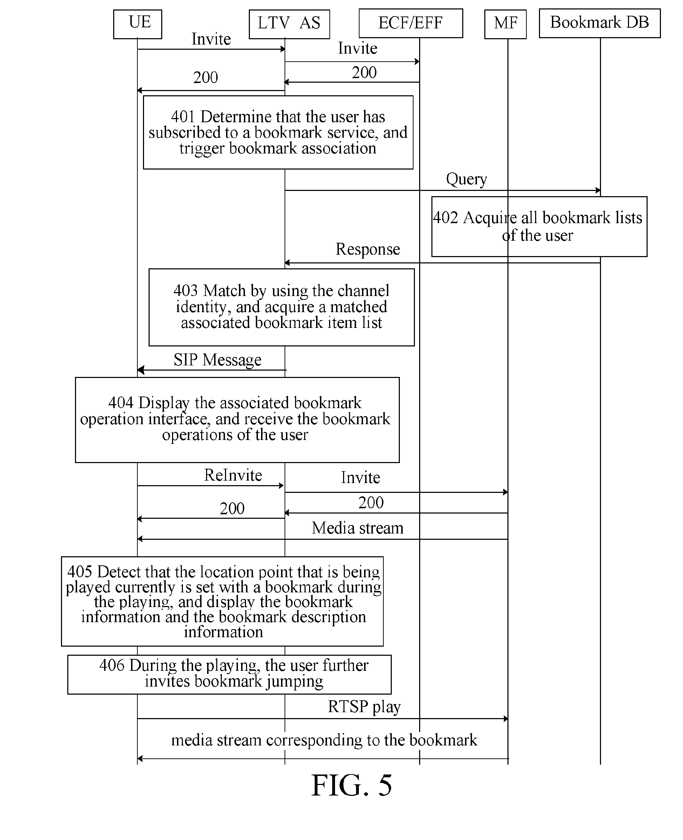

FIG. 5 is a signaling flow chart of a method for processing a bookmark service according to Embodiment 3 of the present invention. As shown in Fig. 5, the triggering unit and the providing unit are located in an LTV AS, and the processing unit and the display control unit are located in the UE. The method includes the following steps.

In step 401, the LTV AS determines that the user has subscribed to a bookmark service, and triggers bookmark association.

After successfully processing the live television program play request of the user, the LTV AS triggers the bookmark association. That is, after processing the live television program request of the user, the LTV AS determines that the user has subscribed to a bookmark service, acquires the requested live program channel identity and the user identity, determines that the channel provides the bookmark service (the media server (MF) stores the content of the channel), and triggers the bookmark association. The requested live program channel identity is acquired by querying the session identity carried in the bookmark association trigger message, and the user identity is acquired from the bookmark association trigger message.

In step 402, the LTV AS acquires the bookmark data of the user.

The LTV AS acquires the bookmark data of the user by querying a bookmark DB.

In step 403, a matching processing is performed by using the channel identity, and a bookmark item list associated with the channel is acquired.

The LTV AS sends the bookmark item list associated with the channel to the UE through an SIP Message message.

In step 404, display the associated bookmark operation interface, and receive the bookmark operation of the user.

The UE displays the associated bookmark operation interface, receives the operation input of the user, and performs corresponding processing. The processing includes the following. The UE sends an request of modifying the session, stops playing the live television program in a multicast mode, and plays the media content provided by the MF in a unicast mode instead. During the playing, the bookmark jumping operation can be performed to jump to play the corresponding media content.

In step 405, the UE detects that the location point that is being played currently is set with a bookmark during the playing, and displays the bookmark information and the bookmark description information.

In step 406, during the playing, the user further requests bookmark jumping.

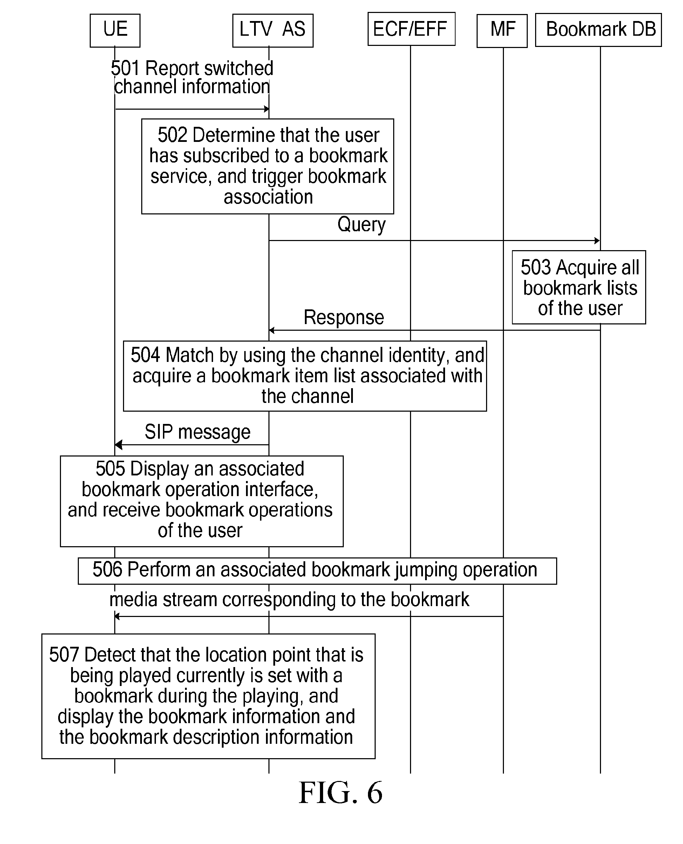

FIG. 6 is a signaling flow chart of a method for processing a bookmark service according to Embodiment 4 of the present invention. As shown in FIG. 6, the triggering unit and the providing unit are located in an LTV AS, and the processing unit and the display control unit are located in the UE. The method includes the following steps.

In step 501, the UE reports switched channel information to the LTV AS.

Delay processing is performed on the channel reporting by the UE, for example, delay of 10 s.

In step 502, the LTV AS determines that the user has subscribed to a bookmark service, and triggers bookmark association.

It is determined that the user has subscribed to a bookmark service, a channel identity and a user identity are acquired, it is determined that the channel is capable of providing a bookmark (an MF saves the channel media content), and the bookmark association is triggered. The channel identity and the user identity are acquired by querying the session identity carried in the bookmark association trigger message. Here, both the triggering unit and the providing unit can be an LTV AS, and the bookmark association trigger message is a message inside an entity.

In step 503, the LTV AS acquires bookmark data of the user.

In step 504, matching processing is performed by using the channel identity, and a bookmark item list associated with the channel is acquired and sent to the UE through an SIP message.

In step 505, the UE displays an associated bookmark operation interface, and receives a bookmark operation of the user.

In step 506, perform an associated bookmark jumping operation.

After receiving the associated bookmark list, the UE displays the associated bookmark operation interface, receives input of the user, performs a bookmark jumping operation, and plays the corresponding media content.

In step 507, the UE detects that the location point that is being played currently is set with a bookmark during the playing, and displays the bookmark information and the bookmark description information.

During the playing, it is detected that the location point that is being played currently corresponds to a bookmark item in the bookmark list, for example, the npt that is played currently is identical with the npt value of the bookmark item in the bookmark list, so that the corresponding bookmark information is exhibited.

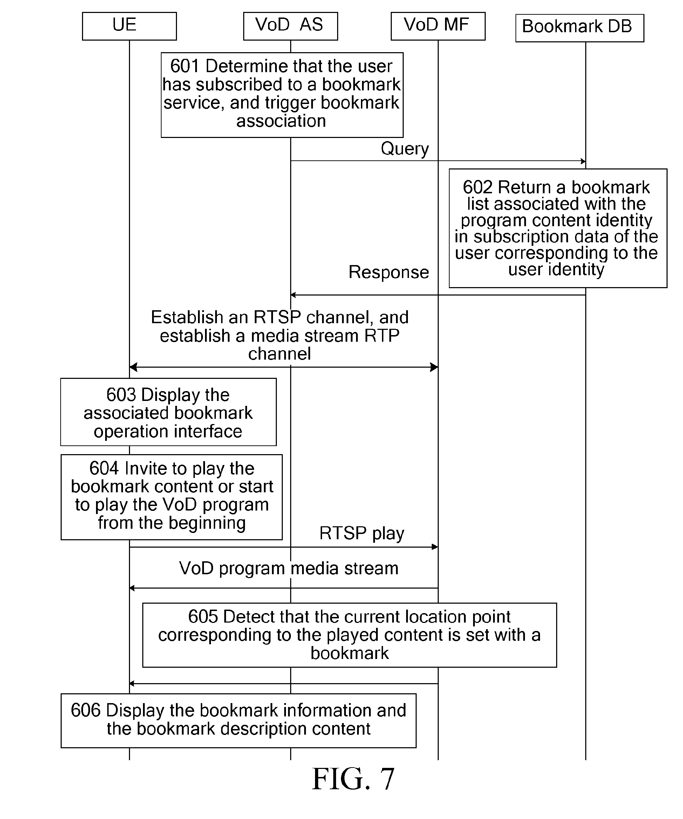

FIG. 7 is a signaling flow chart of a method for processing a bookmark service according to Embodiment 5 of the present invention. As shown in FIG. 7, the triggering unit and the providing unit are located at a VoD AS, the display control unit is located in a media server VoD MF, and the processing unit is located in the UE. The method includes the following steps.

In step 601, the VoD AS determines that the user has subscribed to a bookmark service, and triggers bookmark association.

When processing the request of watching the VoD program of the user, the VoD AS triggers the bookmark association.

In step 602, a bookmark database returns a bookmark list associated with the program content identity in subscription data of the user corresponding to the user identity.

The bookmark list associated with the program content of the user is acquired by querying the bookmark database by using the VoD program content identity and the user identity.

In step 603, the UE displays the associated bookmark operation interface.

When inviting the VoD MF to play the program content, the VoD AS carries the associated bookmark list and sends the associated bookmark list to the VoD MF, and when sending a response message of the program play request to the UE, the VoD AS carries the bookmark list associated with the program content identity and sends the bookmark list to the UE. After receiving the bookmark list, the UE displays the associated bookmark operation interface, receives input of the user, and performs the bookmark jumping operation.

In step 604, the user requests to play the bookmark content or start to play the VoD program from the beginning.

In step 605, the VoD MF detects that the current location point corresponding to the played content is set with a bookmark.

In step 606, the UE displays the bookmark information and the bookmark description content.

When receiving the associated bookmark list and detecting that the media content corresponding to the bookmark in the associated bookmark list enters a play state, the VoD MF performs exhibition processing on the bookmark. Specifically, when the program content is being played, the VoD MF detects that the npt of the current play point is identical with the npt value of a certain bookmark in the bookmark list, acquires the bookmark information, and triggers exhibition processing of the bookmark. Specifically, the exhibition processing of the bookmark includes synthesizing the bookmark information to be exhibited such as a name of the bookmark and the bookmark description information into a media stream picture, or sending the bookmark information to be exhibited as metadata with the media stream, and then the play terminal UE performs display processing on the metadata.

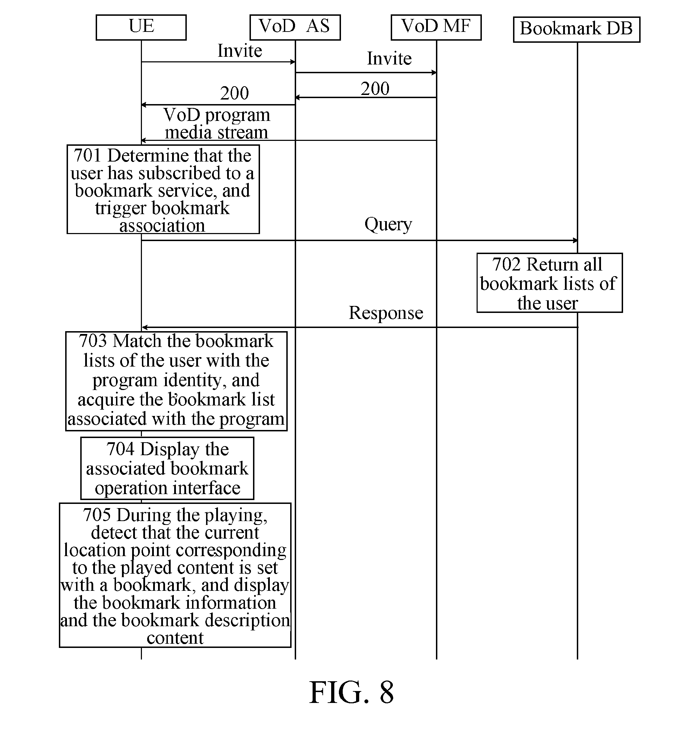

FIG. 8 is a signaling flow chart of a method for processing a bookmark service according to Embodiment 6 of the present invention. As shown in FIG. 8, the triggering unit, the providing unit, the processing unit, and the display control unit are all located in the UE. The method includes the following steps.

In step 701, the UE determines that the user has subscribed to a bookmark service, and triggers bookmark association.

After successfully processing the program play request of the user, the UE triggers the bookmark association. Specifically, in this embodiment, after receiving a response message that the program play request is successful sent by the VoD AS, the UE triggers the bookmark association.

In step 702, the bookmark database returns all the bookmark lists of the user.

The UE acquires a program content identity and a user identity, and queries a bookmark database to acquire the bookmark list of the user.

In step 703, match the bookmark list of the user and the program identity, and acquire a bookmark list associated with the program.

In step 704, the UE displays an associated bookmark operation interface.

At the same time, the UE receives the input of the user, and performs the bookmark jumping operation.

In step 705, the UE detects that the location point that is being played currently is set with a bookmark during the playing, and displays the bookmark information and the bookmark description content.

The UE detects that the media content corresponding to the bookmark item in the associated bookmark list enters a play state, and exhibits the bookmark information.

The method for processing a bookmark service can indicate the bookmark associated with the program content to the user when the program content is played normally by the user, thus facilitating the user to perform operations such as bookmark jumping. At the same time, when the program content is played to a location point set with a bookmark, corresponding bookmark information is displayed, thus facilitating the operations of the user, and improving the experience and satisfaction of the user.

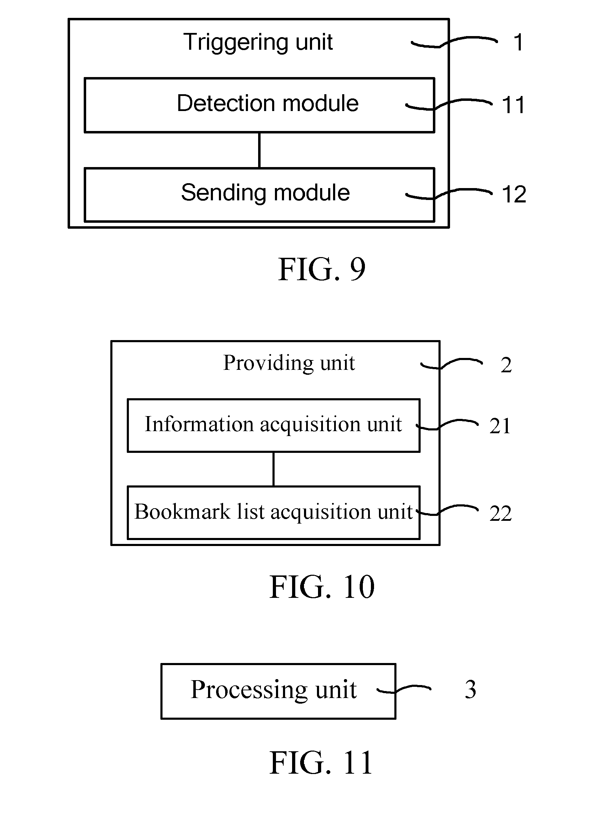

FIG. 9 is a schematic structural view of an apparatus for triggering a bookmark service according to an embodiment of the present invention. As shown in FIG. 9, the apparatus includes a triggering unit 1, configured to send a bookmark association trigger message.

The triggering unit 1 includes: a detection module 11, configured to detect the trigger event and determine whether the trigger event satisfies the bookmark association trigger conditions; and a sending module 12, configured to send a bookmark association trigger message when the trigger event satisfies the bookmark association trigger conditions. The trigger event includes an operation event of the user and a system event. The operation event of the user includes an request event of inviting to play the IPTV program by the user and a result event of processing the program play request of the user. The system event includes a system timer event. After detecting the trigger event, the detection module further checks whether the bookmark association trigger conditions are satisfied, for example, whether the played content supports the bookmark service, and whether the user has subscribed to the bookmark service. If the conditions are satisfied, the bookmark association is triggered. After the bookmark association is triggered, the sending module sends the bookmark association trigger message to start the processing of the bookmark association. The bookmark association trigger message includes a bookmark association trigger indicator and a program content related information, for example, a program content identity or a channel identity and user identity information; or does not directly includes the program related information and the user identity, but carries the indirect information instead, for example, session identity information, and other units can further acquire the program related information and the user identity by using the indirect information.

Furthermore, the apparatus for triggering a bookmark service may be a VoD AS, an LTV AS, or a UE. For example, in the first, second, and embodiments of the method for processing a bookmark service, the apparatus for triggering a bookmark service is a VoD AS; in Embodiment 3 and Embodiment 4 of the method for processing a bookmark service, the apparatus for triggering a bookmark service is an LTV AS; and in Embodiment 6 of the method for processing a bookmark service, the apparatus for triggering a bookmark service is a UE. For the way that the apparatus for triggering a bookmark service triggers the bookmark association, see corresponding embodiments of the method for processing a bookmark service.

The apparatus for triggering a bookmark service can trigger a bookmark association operation at a certain condition, so as to get ready for subsequent bookmark service processing.

FIG. 10 is a schematic structural view of an apparatus for providing a bookmark service according to Embodiment 1 of the present invention. As shown in FIG. 10, the apparatus includes a providing unit 2, configured to acquire a bookmark list associated with the program content according to the bookmark association trigger message, and send the bookmark list.

The providing unit 2 includes: an information acquisition unit 21, configured to acquire the program content related information and the user identity according to the bookmark association trigger message; and a bookmark list acquisition unit 22, configured to acquire the user information corresponding to the user identityand the bookmark list associated with the program content according to the user identity and the program content related information. The program content is identified by the program content related information.

Furthermore, the information acquisition unit may also include: a first acquisition module, configured to acquire the program content related information and/or the user identity from the bookmark association trigger message; or a second acquisition module, configured to query according to the session identity carried in the bookmark association trigger message, so as to acquire the program content related information and/or the user identity. The bookmark list acquisition unit may also further include: a direct acquisition module, configured to query a bookmark database according to the user identity and the content related information, so as to acquire a bookmark list associated with the program content; an indirect acquisition module, configured to query a bookmark database according to the user identity to acquire the bookmark data, and match a bookmark item in the bookmark data with the program content related information, acquire a bookmark item associated with the program content, and acquire a bookmark list.

Furthermore, the apparatus for providing a bookmark service may be a VoD AS, an LTV AS, a bookmark AS, a recommended AS, or a UE. For example, in Embodiment 1, Embodiment 2, and Embodiment 5 of the method for processing a bookmark service, the apparatus for providing a bookmark service is a VoD AS; in Embodiment 3 and Embodiment 4 of the method for processing a bookmark service, the apparatus for providing a bookmark service is an LTV AS; and in Embodiment 6 of the method for processing a bookmark service, the apparatus for providing a bookmark service is a UE. For the way that the apparatus for providing a bookmark service generates and sends the bookmark list associated with the program content, see corresponding embodiments of the method for processing a bookmark service.

The apparatus for providing a bookmark service acquires the program content related information and the bookmark data, matches the two to generate a bookmark list associated with the program content, and sends the bookmark list to other units, so that the other units can perform subsequent bookmark service processing according to the bookmark list.

FIG. 11 is a schematic structural view of an apparatus for processing a bookmark service according to an embodiment of the present invention. As shown in FIG. 11, the apparatus includes a processing unit 3, configured to display a bookmark operation interface associated with the program content according to the bookmark list, and perform a bookmark operation.

The bookmark operation interface may be displayed on an existing program play interface or on a separate display device, for example, an intelligent remote control. The apparatus for processing a bookmark service may be a UE. For example, in the first to sixth embodiments of the method for processing a bookmark service, the apparatus for processing a bookmark service is a UE. For the bookmark operation performed by the apparatus for processing a bookmark service according to the received bookmark list associated with the program content, see corresponding embodiments of the method for processing a bookmark service.

The apparatus for processing a bookmark service performs the bookmark operation according to the received bookmark list associated with the program content, and indicates the bookmark associated with the program content to the user, thus facilitating the user to perform operations such as bookmark jumping.

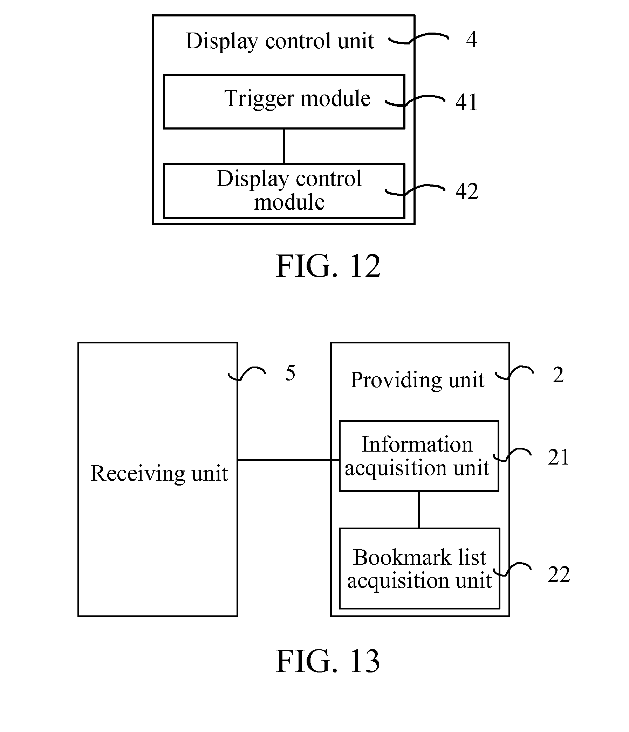

FIG. 12 is a schematic structural view of an apparatus for controlling a bookmark service according to an embodiment of the present invention. As shown in FIG. 12, the apparatus includes a display control unit 4, configured to control a display of bookmark information according to the bookmark list when the program content is played to a location point set with a bookmark.

The display control unit 4 includes: a trigger module 41, configured to detect that a location point set with a bookmark of the program content enters a play state; and a display control module 42, configured to control a display of the bookmark information when it is detected that the location point set with a bookmark enters the play state. The bookmark information includes a name of the bookmark and description information of the bookmark. The display control unit detects that the location point that is being played currently is set with a bookmark, that is, the location point correspond to a bookmark on the associated bookmark list, or, the display control unit detects that the location point on the program content corresponding to the bookmark item in the associated bookmark list enters the play state, and the display of the bookmark information is started.

The display of the bookmark information may be performed in two modes. In one mode the media stream of the displayed program content includes the display of the bookmark information, for example, the bookmark information to be displayed is directly synthesized into a video picture of the media content, and the play terminal plays the program content normally to accomplish the display of the bookmark information without additional displaying processing. In the other mode, the display of the bookmark information is not included in the media stream, that is, is not synthesized in the media picture, the play terminal performs the display processing, for example, transferring the bookmark information to be displayed, and the play terminal performs additional display processing on the video picture, for example, overlapped display on the video picture or display in other auxiliary equipment, for example, on a display interface of an intelligent remote control. The bookmark information to be displayed may be sent with the media stream or not with the media stream, for example, sent by using additional independent channels.

Furthermore, the apparatus for controlling a bookmark service may be a media server or a UE. For example, in Embodiment 1 to Embodiment 4 and Embodiment 6 of the method for processing a bookmark service, the apparatus for processing a bookmark service is a UE; and in Embodiment 5 of the method for processing a bookmark service, the apparatus for processing a bookmark service is a media server VoD MF. For the relevant operations of controlling to display the bookmark information when program content is played to a location point set with a bookmark by the apparatus for controlling a bookmark service according to the received bookmark list associated with the program content, see corresponding embodiments of the method for processing a bookmark service.

The apparatus for controlling a bookmark service enables the user to sense the relevant information of the bookmark at the location point set with a bookmark, thus facilitating the operations of the user, and improving the experience and satisfaction of the user.

FIG. 13 is a schematic structural view of an apparatus for providing a bookmark service according to Embodiment 2 of the present invention. As shown in FIG. 13, the apparatus is an extension of the structure of the apparatus for providing a service in Embodiment 1. Based on the apparatus for providing a service in Embodiment 1, the apparatus for providing a service in this embodiment further includes: a receiving unit 5, configured to receive a bookmark association trigger message. Furthermore, the providing unit 2 acquires a bookmark list associated with the program content according to the bookmark association trigger message received by the receiving unit 5, and sends the bookmark list.

The specific structure and relevant operations of the providing unit 2 are the same as those in Embodiment 1 of the apparatus for providing a bookmark service, the description of which will not be repeated here.

The apparatus for providing a bookmark service acquires the program content related information and the bookmark data, matches the two and generates the bookmark list associated with the program content, and sends the bookmark list to other units, so that the other units can perform subsequent bookmark service processing according to the bookmark list.

It should be noted that the above embodiments are merely provided for elaborating the technical solutions of the present invention, but not intended to limit the present invention. Although the present invention has been described in detail with reference to the foregoing embodiments, it is apparent that those skilled in the art can make various modifications and variations to the invention without departing from the scope of the invention. The invention shall cover the modifications and variations provided that they fall in the scope of protection defined by the following claims or their equivalents.

## Claims

1. A method for processing a bookmark service, comprising:
receiving a bookmark association trigger message;
acquiring a bookmark list associated with a program content according to the bookmark association trigger message; and
sending the bookmark list, wherein the bookmark list is used to display a bookmark operation interface associated with the program content and perform operations on bookmarks.

2. The method for processing a bookmark service according to claim 1, wherein the bookmark list is further configured to control a display of bookmark information according to the bookmark list when the program content is played to a location point set with a bookmark.

3. The method for processing a bookmark service according to claim 1 or 2, wherein the receiving the bookmark association trigger message comprises:
receiving a bookmark association trigger message comprising an operation event, wherein the operation event comprises an operation request event and an operation result event.

4. The method for processing a bookmark service according to claim 3, wherein the acquiring the bookmark list associated with the program content according to the bookmark association trigger message comprises:
acquiring program content related information and a user identity according to the bookmark association trigger message; and
acquiring a user information corresponding to the user identity and a bookmark list associated with the program content according to the user identity and the program content related information, wherein the program content is identified by the program content related information.

5. The method for processing a bookmark service according to claim 4, wherein the acquiring the program content related information according to the bookmark association trigger message comprises:
acquiring the program content related information from the bookmark association trigger message; or
acquiring the program content related information by performing a query according to a session identity carried in the bookmark association trigger message;
and the acquiring the user identity according to the bookmark association trigger message comprises:
acquiring the user identity from the bookmark association trigger message; or
acquiring the user identity by performing a query according to a session identity carried in the bookmark association trigger message.

6. The method for processing a bookmark service according to claim 4, wherein the acquiring the user information corresponding to the user identityand the bookmark list associated with the program content according to the user identity and the program content related information comprises:
acquiring the bookmark list associated with the program content by querying a bookmark database according to the user identity and the content related information; and
acquiring bookmark data by querying the bookmark database according to the user identity, matching a bookmark item in the bookmark data with the program content related information, acquiring a bookmark item associated with the program content, and acquiring the bookmark list.

7. A system for processing a bookmark service, comprising:
a triggering unit, configured to send a bookmark association trigger message;
a providing unit, configured to acquire a bookmark list associated with a program content according to the bookmark association trigger message, and send the bookmark list; and
a processing unit, configured to display a bookmark operation interface associated with the program content according to the bookmark list, and perform operations on bookmarks.

8. The system for processing a bookmark service according to claim 7, further comprising:
a display control unit, configured to control a display of bookmark information according to the bookmark list when a program content is played to a location point set with a bookmark.

9. An apparatus for providing a bookmark service, comprising:
a receiving unit, configured to receive a bookmark association trigger message; and
a providing unit, configured to acquire a bookmark list associated with a program content according to the bookmark association trigger message received by the receiving unit, and send the bookmark list.

10. The apparatus for providing a bookmark service according to claim 9, wherein the providing unit comprises:
an information acquisition unit, configured to acquire program content related information and a user identity according to the bookmark association trigger message; and
a bookmark list acquisition unit, configured to acquire a user information corresponding to the user identity and a bookmark list associated with the program content according to the user identity and the program content related information, wherein the program content is identified by the program content related information.

11. The apparatus for providing a bookmark service according to claim 10, wherein the information acquisition unit comprises:
a first acquisition module, configured to acquire the program content related information and/or the user identity from the bookmark association trigger message; or
a second acquisition module, configured to acquire the program content related information and/or the user identity by performing a query according to a session identity carried in the bookmark association trigger message.

12. The apparatus for providing a bookmark service according to claim 11, wherein the bookmark list acquisition unit comprises:
a direct acquisition module, configured to query a bookmark database according to the user identity and the content related information, and acquire the bookmark list associated with the program content; and
an indirect acquisition module, configured to acquire bookmark data by querying a bookmark database according to the user identity, match a bookmark item in the bookmark data with the program content related information, acquire a bookmark item associated with the program content, and acquire the bookmark list.

13. The apparatus for providing a bookmark service according to any one of claims 9 to 12, wherein the apparatus for providing a bookmark service is a video on demand (VoD) application server (AS), a live television program (LTV) AS, a bookmark AS, a recommended AS, or a user equipment (UE).
